# EUROPEAN PATENT APPLICATION

(11) **EP 4 546 607 A1**
(43) Date of publication of application: **30.04.2025**
(21) Application number: 24823510.3
(22) Date of filing: 13.02.2024
(51) Int. Cl.: H02J 7/00, H01M 10/44, B60L 58/22, H01M 10/42

(54) **BATTERY MANAGEMENT DEVICE, BATTERY SYSTEM, AND BATTERY MODULE ASSEMBLY BALANCING METHOD**

(30) Priority: 13.06.2023 KR 20230075256
(71) Applicant: LG Energy Solution, Ltd., Seoul 07335 (KR)
(72) Inventor: LEE, Heonguk, Daejeon 34122 (KR); SUN, Ju Young, Daejeon 34122 (KR)
(74) Representative: BCKIP Part mbB
(86) International application number: PCT/KR2024/001980
(87) International publication number: WO 2024/257988

(57) **Abstract**

A battery system, including a battery rack having a plurality of battery module assemblies (BMA), according to embodiments of the present invention may include a first battery management apparatus for controlling the battery rack, wherein the first battery management apparatus is configured to determine, at predetermined intervals, whether conditions for performing a BMA balancing are satisfied, wherein fulfillment of the conditions depend on the at least one of (i) whether the battery system is in an idle state and (ii) a state of charge of the battery system, and to determine a BMA balancing target and a BMA balancing time in response to at least one of the conditions for performing the BMA balancing is satisfied; and a second battery management apparatus configured to receive a BMA balancing command including the BMA balancing target and the BMA balancing time from the first battery management apparatus and to perform the BMA balancing.

## Description

### [Cross-Reference to Related Applications]

This application claims priority to and the benefit of Korean Patent Application No.10-2023-0075256 filed in the Korean Intellectual Property Office on June 13, 2023 the entire contents of which are incorporated herein by reference.

### [Technical Field]

The present invention relates to a battery management apparatus, a battery management system, and a method of balancing battery module assemblies, and more particularly, to a battery management apparatus, a battery management system, and a method that perform balancing among battery module assemblies in a battery rack including a plurality of battery module assemblies.

### [Background]

Secondary batteries, capable of recharging and reuse, are manufactured as battery modules or packs by connecting multiple battery cells in series based on the required output capacity, serving as power sources for diverse applications. These batteries are used in small, high-tech electronic devices like smartphones, as well as a variety of fields including electric bicycles, electric vehicles, and energy storage systems (ESS).

A battery module or pack, including multiple battery cells, faces safety and operational efficiency issues if certain cells encounter overvoltage, overcurrent, or overheating, thereby necessitating the need for a detection means. Therefore, the battery module or battery pack is equipped with a battery management system (BMS) that measures voltage values of respective battery cells and monitors and controls voltage status of the battery cells based on the measured values.

Meanwhile, voltage deviation among battery cells occurs due to various factors and cell balancing by the battery management system may reduce the voltage deviation. However, when a battery module is replaced in a system including a plurality of battery modules, a problem arises in that efficient inter-module balancing and inter-cell balancing cannot be expected using only the existing cell balancing function.

### [Summary]

### [Technical Problem]

In order to achieve the objective of the present disclosure, embodiments of the present invention provide a battery management apparatus for performing balancing among battery module assemblies.

According to another embodiment of the present disclosure, embodiments of the present invention provide a method for performing balancing among battery module assemblies.

According to another embodiment of the present disclosure, embodiments of the present invention provide a battery system for performing balancing among battery module assemblies.

### [Technical Solution]

In order to achieve the objective of the present disclosure, a battery management apparatus according to an embodiment may control a battery system including a plurality of battery module assemblies (BMA) and include at least one processor; and a memory configured to store instructions executed by the at least one processor. The instructions cause the at least one processor to determine, at predetermined intervals, whether conditions for performing a BMA balancing are satisfied, wherein fulfillment of the conditions depends on at least one of (i) whether the battery system is in an idle state and (ii)a state of charge of the battery system; and perform the BMA balancing by determining a BMA balancing target and a BMA balancing time in response to at least one of the conditions for performing the BMA balancing being satisfied.

Here, the conditions include whether the battery system remains in an idle state for a pre-determined period of time without performing charging or discharging; and whether the state of charge of the battery system exceeds a pre-determined reference.

The instructions may cause the at least one processor to calculate a SOC difference of each battery module assembly compared to one battery module assembly with a minimum state of charge (SOC) in the battery system; and for each battery module assembly, select all cells of the battery module assembly as balancing targets when the SOC difference of the battery module assembly compared to the minimum SOC is greater than or equal to a SOC difference threshold.

The instructions may cause the at least one processor to: for each battery module assembly for which all cells of the battery module assembly are selected as balancing targets, transmit a BMA balancing command including information about the balancing targets and a determined balancing time to the battery module assembly.

According to another embodiment of the present disclosure, a battery module assembly (BMA) balancing method, in a battery rack including a plurality of battery module assemblies (BMA), may include determining, by a first battery management apparatus configured to control the battery rack, whether one or more conditions for performing a BMA balancing are satisfied, wherein fulfilment of the conditions depends on at least one of (i) whether the battery system is in an idle state and (ii) a state of charge of the battery system at predetermined intervals; and performing, by the first battery management apparatus, the BMA balancing by determining a BMA balancing target and a BMA balancing time in response to at least one of the conditions for performing the BMA balancing being satisfied.

Determining whether the conditions for performing the BMA balancing may include whether the battery system remains in the idle state for a pre-determined period of time without performing charging or discharging; and whether the state of charge of the battery system exceeds a pre-determined reference.

Performing the BMA balancing may include calculating a SOC difference of each battery module assembly compared to one battery module assembly with a minimum state of charge (SOC) in the battery system; and for each battery module assembly, selecting all cells in the battery module assembly as balancing targets when the SOC difference of the battery module assembly compared to a minimum SOC is greater than or equal to a SOC difference threshold.

The method may further include for each battery module assembly for which all cells of the battery module assembly are selected as balancing targets, transmitting a BMA balancing command including information about the balancing target and determined balancing time to the battery module assembly.

The method may further include for each battery module assembly for which all cells of the battery module assembly are selected as balancing targets, receiving at a second battery management apparatus included in the battery module assembly, the BMA balancing command; and performing, by the second battery management apparatus, the BMA balancing on all cells in the battery module assembly using an internal balancing circuit.

The method may further include for each battery module assembly for which all cells of the battery module assembly are selected as balancing targets, determining, by the second battery management apparatus, whether a SOC deviation of each cell falls within a range between a first value and a second value; and for each cell for which the SOC deviation falls within the range between the first value and the second value, performing, by the second battery management apparatus, the BMA balancing.

Here, the SOC difference threshold for the BMA balancing may be equal to the first value.

Meanwhile, determining whether the battery system is in the idle state is based on whether a value of current flowing in the battery system is less than a predetermined current threshold.

According to another embodiment of the present disclosure, a battery system, including a battery rack having a plurality of battery module assemblies (BMA), may include a first battery management apparatus for controlling the battery rack, wherein the first battery management apparatus is configured to determine, at predetermined intervals, whether conditions for performing a BMA balancing are satisfied, wherein fulfillment of the conditions depends on at least one of (i) whether the battery system including the battery rack is in an idle state and (ii) a state of charge of the battery system and to determine a BMA balancing target and a BMA balancing time in response to at least one of conditions for performing the BMA balancing being satisfied; and a second battery management apparatus located in a battery module assembly and including a balancing circuit, wherein the second battery management apparatus is configured to receive a BMA balancing command including the BMA balancing target and the BMA balancing time from the first battery management apparatus and to perform the BMA balancing.

The conditions for performing BMA balancing include whether the battery system remains in an idle state for a pre-determined period of time without performing charging or discharging and whether the state of charge of the battery system exceeds a pre-determined reference.

The first battery management apparatus may be configured to calculate a SOC difference of each battery module assembly compared to one battery module assembly with a minimum state of charge (SOC) in the battery system, and for each battery module assembly, select all cells of the battery module assembly as balancing targets when the SOC difference of the battery module assembly compared to the minimum SOC is greater than or equal to SOC difference threshold, and to transmit the BMA balancing command including the selected balancing target and determined balancing time to each battery module assembly for which all cells of the battery module assembly are selected as balancing targets.

Meanwhile, the second battery management apparatus of each battery module assembly for which all cells of the battery module assembly are selected as balancing targets may be configured to receive the BMA balancing command from the first battery management apparatus and to perform the BMA balancing for the balancing time on all cells in the battery module assembly using a balancing circuit.

In addition, for each battery module assembly for which all cells of the battery module assembly are selected as balancing targets: the second battery management apparatus may determine whether a SOC deviation of each cell compared to a minimum cell SOC falls within a range between a first value and a second value; and for each cell for which the SOC deviation of the cell falls within the range between the first value and the second value, perform the BMA balancing. Here, the first value may be, for example, 2.5%, and the second value may be, for example, 10%.

Here, the minimum cell SOC among the cell SOCs of a plurality of cells in the battery system may be calculated by the RBMS, which may be the first battery management apparatus. In other words, the RBMS may obtain battery state information from a plurality of second battery management apparatuses, calculate the minimum cell SOC, and provide the calculated information to the plurality of second battery management apparatuses.

Meanwhile, the SOC difference threshold for performing BMA balancing according to embodiments of the present invention may be determined equal to the lower limit value of the cell SOC deviation according to the general cell balancing condition.

### [Advantageous Effects]

According to the embodiment of the present invention as described above, balancing among modules can be performed using an existing cell balancing circuit without adding a separate hardware configuration for balancing among modules and without interfering with the general cell balancing function that used to be performed.

Accordingly, when replacing or expanding a battery module assembly in a system including multiple battery module assemblies, the SOC deviation among battery module assemblies can be efficiently adjusted.

### [Brief Description of the Drawings]

FIG. 1 is a block diagram showing a structure of a battery module assembly and a battery management apparatus to which embodiments of the present invention may be applied.
FIG. 2 is a conceptual diagram explaining general cell balancing.
FIG. 3 is a diagram to explain a problem of cell balancing when replacing a battery module assembly in an existing battery system.
FIG. 4 shows an operational sequence of a balancing method among battery module assemblies according to embodiments of the present invention.
FIG. 5 shows a detailed operational sequence of the preprocessing step according to embodiments of the present invention.
FIG. 6 shows a detailed operational sequence of the entry condition determination step according to embodiments of the present invention.
FIG. 7 shows a detailed operational sequence of the BMA balancing step according to embodiments of the present invention.
FIG. 8 is a block diagram of a rack BMS and a pack BMS according to embodiments of the present invention.
FIG. 9 is a diagram for explaining the BMA balancing concept and balancing performance results according to embodiments of the present invention when replacing a battery module assembly.

- 100:: battery module assembly (BMA)
- 110:: Pack BMS (PBMS)
- 111:: controller
- 113:: cell balancing module
- 115:: communication module
- 200:: Rack BMS (RBMS)
- 210:: controller
- 220:: communication module

### [Detailed Description]

The present invention may be modified in various forms and have various embodiments, and specific embodiments thereof are shown by way of example in the drawings and will be described in detail below. It should be understood, however, that there is no intent to limit the present invention to the specific embodiments, but on the contrary, the present invention is to cover all modifications, equivalents, and alternatives falling within the spirit and technical scope of the present invention. Like reference numerals refer to like elements throughout the description of the figures.

It will be understood that, although the terms such as first, second, **A, B,** and the like may be used herein to describe various elements, these elements should not be limited by these terms. These terms are only used to distinguish one element from another. For example, a first element could be termed a second element, and, similarly, a second element could be termed a first element, without departing from the scope of the present invention. As used herein, the term "and/or" includes combinations of a plurality of associated listed items or any of the plurality of associated listed items.

It will be understood that when an element is referred to as being "coupled" or "connected" to another element, it can be directly coupled or connected to the other element or an intervening element may be present. In contrast, when an element is referred to as being "directly coupled" or "directly connected" to another element, there is no intervening element present.

The terms used herein is for the purpose of describing specific embodiments only and are not intended to limit the present invention. As used herein, the singular forms "a", "an" and "the" are intended to include the plural forms as well, unless the context clearly indicates otherwise. It will be further understood that the terms "comprises", "comprising", "includes", "including" and/or "having", when used herein, specify the presence of stated features, integers, steps, operations, constitutional elements, components and/or combinations thereof, but do not preclude the presence or addition of one or more other features, integers, steps, operations, constitutional elements, components, and/or combinations thereof.

Unless otherwise defined, all terms used herein, including technical and scientific terms, have the same meanings as commonly understood by one skilled in the art to which the present invention belongs. It will be further understood that terms, such as those defined in commonly used dictionaries, should be interpreted as having meanings that are consistent with their meanings in the context of the relevant art and will not be interpreted in an idealized or overly formal sense unless expressly so defined herein.

Hereinafter, exemplary embodiments of the present invention will be described in detail with reference to the accompanying drawings.

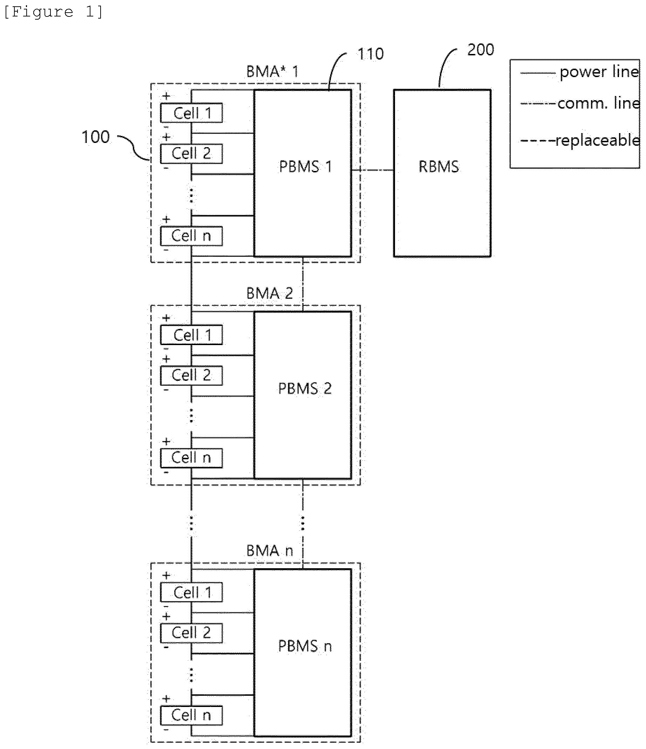

FIG. 1 is a block diagram showing a structure of a battery module assembly and a battery management apparatus to which embodiments of the present invention may be applied.

Referring to FIG. 1, each battery module assembly may include a plurality of battery cells connected in series. The most commonly used battery cells are lithium-ion (Li-Ion) battery cells. The battery module assembly may be connected to a load through a positive terminal and a negative terminal and perform charging/discharging operation. The battery module assemblies may be configured to be connected in series/parallel depending on requirements of the system in which the battery is applied, and the battery module assemblies are connected in series in the example shown in FIG. **1****.**

The battery module assembly 100 typically includes a pack battery management system (PBMS) for managing a battery module (or battery pack) including a plurality of battery cells connected in series. The PBMS 110 according to embodiments of the present invention may include various components such as fuses, current sensing elements, thermistors, switches, and balancers, and may be implemented in the form of a printed circuit board (PCB). In other words, the battery module assembly 100 may be a module including a plurality of cells and a PBMS PCB, and may be connected in series with other battery module assemblies to form a battery rack, as shown in FIG. **1****.**

A pack battery management system (PBMS) 110 may monitor a current, a voltage, and a temperature of each battery module to be managed, calculate a state of charge (SOC) based on the monitoring results, and control charging and discharging. Here, the SOC refers to a current charged state of a battery (or amount of charge), represented in percent points [%].

The pack battery management system 110 may monitor battery cells, read cell voltages, and transmit them to the rack BMS or other components, devices, or systems connected to the battery. The rack BMS (RBMS) 200 is a battery management system that manages a rack including a plurality of battery module assemblies (BMA) and is linked to the pack BMS of each battery module assembly. In the present invention, the RBMS 200, unlike the PBMS 110, does not include a separate balancing circuit therein.

Meanwhile, the PBMS 110 and the RBMS 200 may include a communication module therein, respectively, to communicate with each other and with other devices and systems within a device including the battery system. The communication module of the BMS may communicate with other systems using controller area network (CAN) or Ethernet. When using CAN communication, components, modules or systems in the BMS may be connected to one another through a CAN bus.

Meanwhile, a plurality of battery cells included in a battery module may not have completely identical characteristics, and voltage deviation may occur among cells connected in series due to natural discharge of each cell, environmental factors during use, etc. The PBMS 110 may include a cell balancing (CB) circuit that performs a balancing operation to evenly balance the charges of battery cells to extend the lifespan of the battery pack. Somehow, the capacity of the cell balancing circuit may be limited by hardware. For example, the cell balancing capacity that can be provided may be limited due to limitations in the wattage, resistance value, and thermal durability of the cell balancing circuit.

Additionally, the PBMS 110 may include a Micro Controller Unit (MCU) or Battery Monitoring Integrated Chip (BMIC) for controlling the internal components described above in conjunction with them. Here, the BMIC is located inside the BMS and may be an IC-type component that measures information such as voltage, temperature, and current of the battery cell/module.

In the present invention, the BMIC may measure voltages of cells in the battery module assembly to which the BMIC belongs according to a command from the RBMS 200, report the cell voltages to the RBMS 200, and ON/OFF control a Field Effect Transistor (FET) element in the balancing circuit.

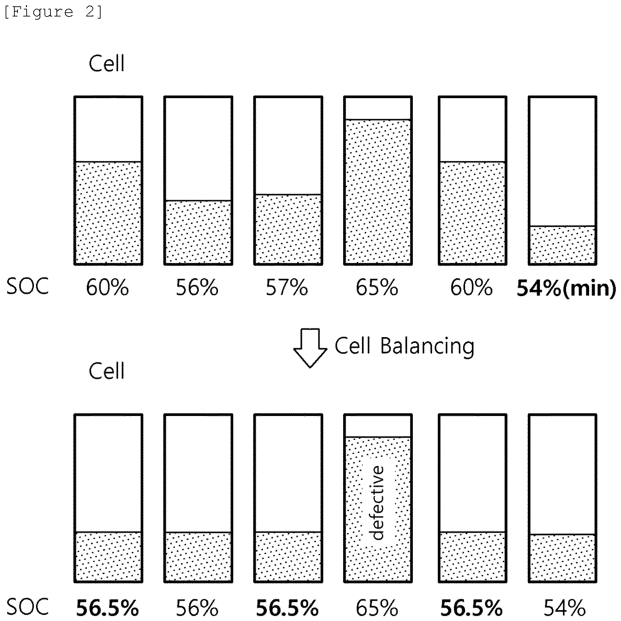

FIG. 2 is a conceptual diagram explaining general cell balancing.

As shown in FIG. 2, a plurality of battery cells included in a battery module have SOC variations among cells due to natural discharge of each cell, environmental factors during use, etc. Cell balancing that is performed by a pack BMS for reducing SOC deviation is generally performed using a balancing circuit including a switch **(e.g.,** transistor) and a resistor arranged for each cell, which is controlled by a control unit.

The cell balancing operation may be performed by discharging cells having a SOC deviation within a certain range having an upper limit value and a lower limit value with regard to the lowest SOC. Cell balancing can be performed, for example, by discharging individual cells that have SOC deviations in the range of 2.5% to 10%. In the example of FIG. 2, the lowest SOC within one module is 54%, and it can be understood that cell balancing is performed for cells 1, 3, and 5 having a deviation between 2.5% to 10% with regard to the lowest SOC. Here, 2.5% may be defined as the lower limit of cell SOC deviation for cell balancing and 10% may be defined as the upper limit of cell SOC deviation for cell balancing.

Here, for example, the SOC deviation range for cell balancing refers to a SOC deviation between cell groups, which is a SOC error range caused by manufacturing process that may appear in the battery cell production line. Somehow, cells that have exceeding the inter-group deviation, such as cell 4 with an SOC of 65% in FIG. 2, are judged to be defective cells and do not go through cell balanced, but rather be highlighted with the defective state.

Meanwhile, in this situation, when some of the plurality of BMAs in the battery system are replaced, new, unused BMAs are often applied to the battery use field as is. In this case, the SOC of the new BMA may have a larger deviation compared to the SOC of the BMA already installed and in use.

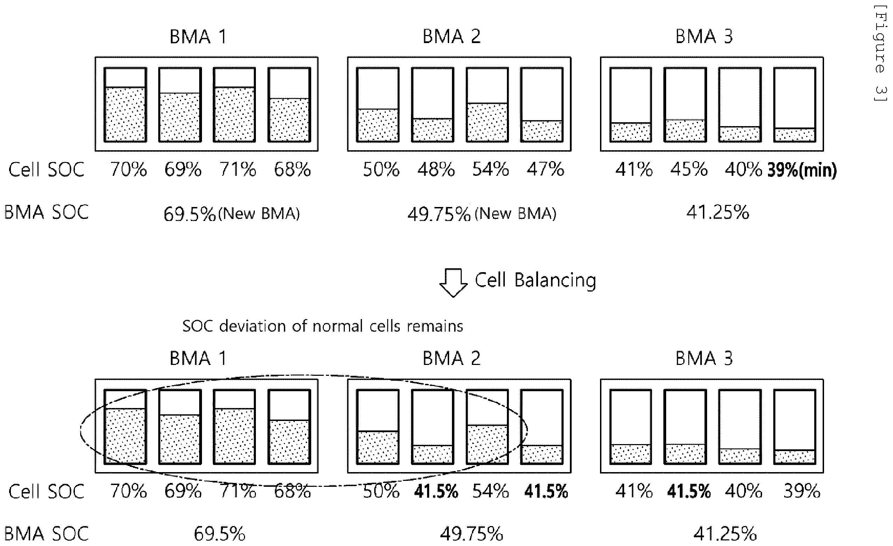

FIG. 3 is a diagram to explain a problem of cell balancing when replacing a battery module assembly in an existing battery system.

Referring to the example shown in FIG. 3, the SOC of BMA3, which has been used in the existing system, is 41.25%, the average cell SOC of newly added BMA1 is 69.5%, and the average cell SOC of newly added BMA2 is 49.75%. Here, the lowest cell SOC among the cell SOCs in the system is 39%, and cell balancing may be performed, based on this, only on cells with a SOC deviation within 10%. In other words, in newly added BMAs, cell balancing is performed only for cells 2 and 4 in BMA2, and cell balancing is not performed for all cells in BMA1 and for cells other than cells 2 and 4 in BMA2. Accordingly, even though the cells are normal, a problem occurs in which SOC deviation among cells remains even after cell balancing is done.

In summary, conventional cell balancing is not performed on cells with a SOC deviation of 10% or more compared to the lowest cell SOC among all cells, and thus, the remaining SOC deviation among BMAs causes a decrease in battery charge and discharge performance.

Thus, the present invention is proposed to solve this problem and provides a balancing method for a battery rack, the method including a two-step balancing operation (balancing among battery module assemblies and general cell balancing).

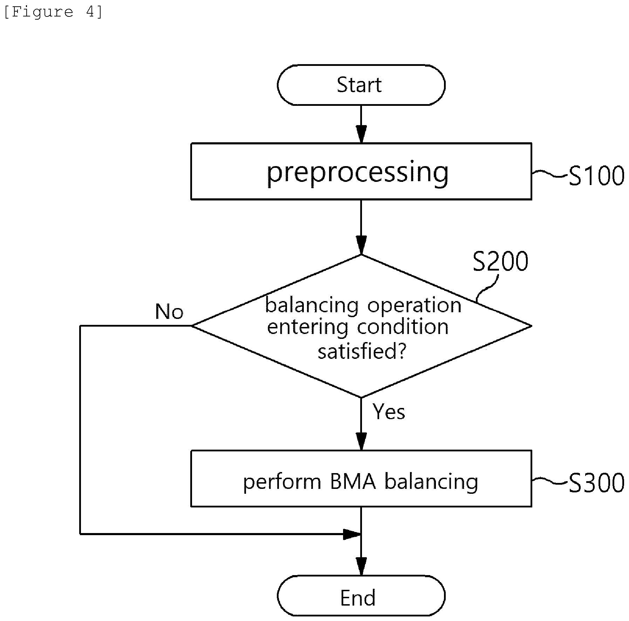

FIG. 4 shows an operational sequence of a balancing method among battery module assemblies according to embodiments of the present invention.

The balancing method among battery module assemblies according to embodiments of the present invention may be performed by a rack BMS, which is a battery management device that manages a battery rack, or by a controller within the rack BMS. The balancing method of a battery rack according to embodiments of the present invention may also be performed by a rack BMS and a pack BMS.

The balancing method among battery module assemblies according to embodiments of the present invention may include a preprocessing (S100) step, an entry condition determination (S200) step, and a BMA balancing performance (S300) step.

The preprocessing (S100) step may be a step to check a balancing performance cycle, determine whether the cycle has been reached, and decide whether to further proceed with the entry condition determination step.

The entry condition determination (S200) step may be a step of determining whether conditions for performing BMA balancing are satisfied, the conditions including whether the battery is in an idle state and whether an appropriate SOC is secured to perform balancing.

In other words, through the preprocessing (S100) step and the entry condition determination (S200) step according to embodiments of the present invention, it may be determined if the BMA balancing performance condition is satisfied depending on whether the battery system is in an idle state and on the state of charge of the battery.

In the BMA balancing performance (S300) step, a balancing target BMA may be selected and the balancing time may be determined. In addition, a balancing execution command and balancing time are transmitted to the selected target BMA, allowing the PBMS within the target BMA to perform balancing using a cell balancing circuit.

In summary, the battery module assembly balancing method according to embodiments of the present invention is a BMA balancing method in a battery rack including a plurality of battery module assemblies (BMAs), in which a first battery management apparatus, configured to control the battery rack, may determine whether one or more condition for performing BMA balancing are satisfied depending on whether the battery system is in an idle state and on a state of charge of the battery system at regular intervals and may perform BMA balancing by determining a BMA balancing target and a BMA balancing time in the instance that the condition for performing BMA balancing is satisfied.

The determining whether the one or more condition for performing BMA balancing is satisfied may include determining whether the battery system remains in an idle state for a certain period of time without performing charging or discharging and determining whether the state of charge of the battery system exceeds a determined reference.

The performing BMA balancing may include calculating SOC deviation of each battery module assembly compared to the battery module assembly with the minimum state of charge (SOC) in the battery system; and selecting all cells in a corresponding battery module assembly as balancing targets in the instance that the SOC deviation of the corresponding battery module assembly compared to the minimum SOC is greater than or equal to the SOC deviation threshold.

The method may further include transmitting a BMA balancing command including information about the selected balancing target and determined balancing time to a balancing target battery module assembly.

The method may further include receiving the BMA balancing command, by a second battery management apparatus in the balancing target battery module assembly; and performing cell balancing, by the second battery management apparatus, on all cells in the balancing target battery module assembly using an internal balancing circuit.

The method may further include determining, by the second battery management apparatus, whether SOC deviation of each cell compared to the minimum SOC falls within a range between a first value and a second value; and performing cell balancing, by the second battery management apparatus, on each cell where the SOC deviation of the cell falls within a range between the first value and the second value.

Here, the SOC difference threshold for BMA balancing is determined equal to the first value.

Meanwhile, whether the battery system is in an idle state is determined depending on whether a value of current flowing in the battery system is less than a predetermined current threshold.

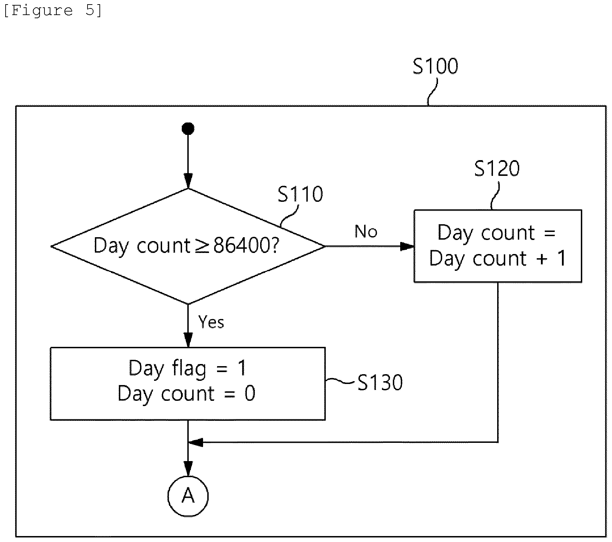

FIG. 5 shows a detailed operational sequence of the preprocessing step according to embodiments of the present invention.

Specifically, in the preprocessing (S100) step, for example, in the instance that the balancing performance cycle is set to one day (24 hours), it is checked whether the count variable Day_count has reached 86400 (S110). If the value has not been reached, the value of variable Day _count increases by 1 (S120). The step (S110) of checking whether the count variable Day_count has reached 86400 (=60*60*24) may be performed at a 1-second cycle. For example, after one day from the initial value of 0, Day _count reaches 86400, which can be seen that the balancing performing cycle, **i.e.,** one day, has arrived. In this case, the value of Day_flag, a variable indicating that the balancing cycle has been reached, may be set to **"1"** and the value of Day_count, a count variable, is initialized to **"0"** (S130).

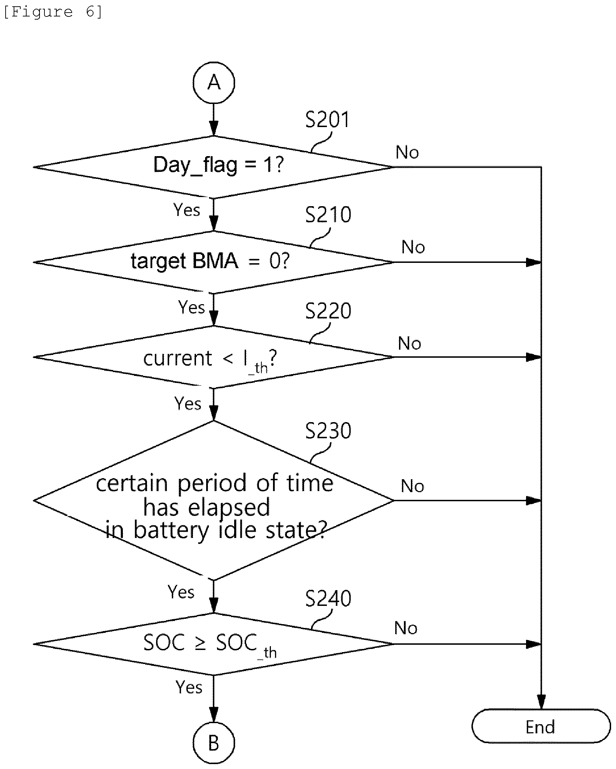

FIG. 6 shows a detailed operational sequence of the entry condition determination step according to embodiments of the present invention.

Referring to FIG. 6, in the step of determining entry condition for performing balancing, the value of variable Day_flag is checked to determine whether one day, which is the balancing performance cycle, has passed (S201). The value of variable Day_flag is set to 1 after one day has elapsed, as seen in FIG. 5 above. Thus, the entry condition determination procedure is not performed and is immediately terminated if the balancing performance cycle, for example, one day, has not elapsed since the previous balancing performance (No in S201).

If the value of variable Day_flag is 1 (Yes in S201), it is checked whether a target BMA, which is a target of balancing, is already determined (S210). If the balancing target BMA has already been specified (No in S210), the subsequent procedures may not be performed and the procedure may be terminated.

If the target BMA is not determined (i.e., target BMA = 0), the subsequent procedures are performed to check whether the battery is in an idle state (S220). Whether the battery is in an idle state may be checked by checking whether the current flowing through the battery is less than a current threshold (Iₜₕ). Here, the current threshold (Iₜₕ) may be set to, for example, 1.89A, but is not limited to this. If the battery is in an idle state, it may further be checked whether a certain period of time has elapsed in the idle state (S230). Here, the certain period of time may be set to, for example, 30 minutes.

If the battery has been in an idle state over the certain period of time, it is checked whether the SOC of the battery is equal to or above a certain reference value (SOC_th) (S240), and the process proceeds to the next step if the condition that the SOC of the battery is equal to or above the certain reference value is satisfied. Here, the SOC of the battery may be an average SOC value of all battery module assemblies included in the battery system. Here, the certain reference value for SOC may be determined to 46%, for example, but the scope of the present invention is not limited to this value.

In summary, the entry condition determination step is a step to determine whether the conditions for performing BMA balancing are satisfied, which is a procedure to check whether the battery is in an idle state for a certain period of time or more and whether the state of charge of the battery is sufficient to perform balancing.

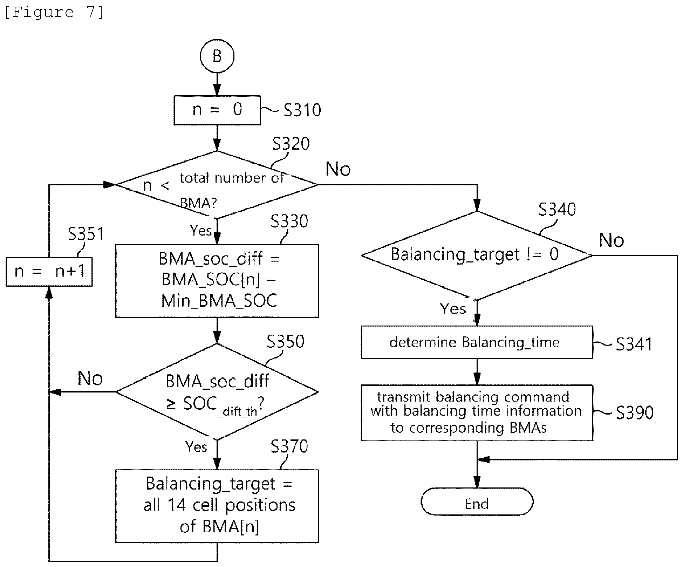

FIG. 7 shows a detailed operational sequence of the BMA balancing step according to embodiments of the present invention.

In the BMA balancing performance step shown in FIG. 7, a balancing target BMA may be selected and a balancing time may be determined, and a balancing execution command and information about the balancing time may be transmitted to the selected target BMA.

More specifically, the value of variable n representing a battery module assembly (BMA) may be set to 0 (S310), and it is checked whether the value of variable n reaches the total number of battery module assemblies in the system (S320). If the value of n does not reach the total number of battery module assemblies (Yes in S320), it may be checked whether the SOC difference between BMAs (BMA_soc_diff), which is defined as a value of difference between the SOC of a corresponding BMA (BMA_SOC[n]) and the SOC of the minimum BMA SOC (Min_BMA_SOC) (S330), is greater than or equal to the SOC difference threshold (SOC_diff_th) (S350). If the SOC difference of the corresponding BMA compared to the minimum BMA SOC is greater than or equal to the SOC difference threshold, all cells in the corresponding BMA (for example, 14 cells included in a battery module assembly) are selected as balancing targets (S370). The operations of S330, S350, and S370 described above may be performed for all BMAs in the system while increasing the variable n (S351).

Meanwhile, when the SOC difference comparison and balancing target selection for all BMAs are completed (No in S320), it is checked again whether the balancing target has been selected (S340) and the balancing time is determined (S341). Here, the balancing time may be set to a value of, for example, 8245 seconds (= cell capacity (71Ah) * 3600s * amount of cell balancing (0.1%)/balancing current (31mA)), but is not limited to this.

Once the balancing target and balancing time are determined, a balancing command with balancing time information may be transmitted to the balancing target BMA (S390). Here, a plurality of balancing target BMAs may be selected, and in this case, balancing commands and balancing time information may be transmitted to each pack BMS of the plurality of target BMAs.

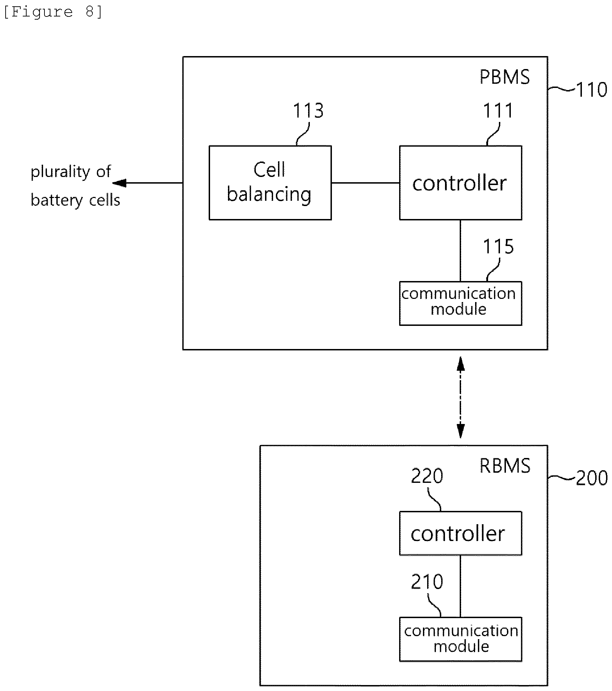

FIG. 8 is a block diagram of a rack BMS and a pack BMS according to embodiments of the present invention.

As previously seen in FIG. 1, the rack BMS 200 may interoperate with all battery module assemblies (BMA) included in the rack, and communicate with a pack BMS 110 within each battery module assembly.

Referring to FIG. 8, the pack BMS 110 according to embodiments of the present invention may include a controller (MCU; Micro Control Unit) 111, a cell balancing module 113, and a communication module 115. In this specification, the controller may be referred to as a processor, a control unit, MCU, etc., and may refer to a dedicated processor on which methods according to embodiments of the present invention are performed. In addition, the controller 111 may be provided in the form of a Battery Monitoring Integrated Chip (BMIC). The BMIC located within each pack BMS 110 may measure a voltage of each cell according to a command from the RBMS 200, report it to the RBMS 200, and ON/OFF control a FET element in a balancing circuit.

The RBMS 200 may include a controller 210 and a communication module 220. The controller 210 of the RBMS 200 may calculate a BMA voltage from each cell voltage measured and reported by the BMIC, and calculate the BMA SOC based on the BMA voltage. The controller 210 may select a BMA balancing target using the calculated BMA SOC and transmit information about the selected target to the controller 111 (e.g., BMIC) of the pack BMS 110. The controller of the pack BMS 110 that has received the information may perform balancing on the target cells using the cell balancing circuit 113. Here, balancing may be a discharge operation for each cell performed during a determined balancing time.

In summary, the battery system according to embodiments of the present invention may be a battery system having a battery rack including a plurality of battery module assemblies (BMA), in which a first battery management apparatus for controlling the battery rack determines, at regular intervals, whether one or more condition for performing BMA balancing is satisfied depending on whether the battery system is in an idle state and on a state of charge of the battery system and determines a BMA balancing target and BMA balancing time in the instance that the condition for performing BMA balancing is satisfied and a second battery management apparatus, which is located in a battery module assembly and includes a balancing circuit, receives a BMA balancing command including the BMA balancing target and the BMA balancing time from the first battery management apparatus and performs cell balancing.

The first battery management apparatus may determine whether one or more condition for performing BMA balancing is satisfied by determining whether the battery system remains in an idle state for a certain period of time without performing charging or discharging and determine whether the state of charge of the battery system exceeds a determined reference.

Furthermore, the first battery management apparatus may calculate a SOC difference of each battery module assembly compared to the battery module assembly with the minimum state of charge (SOC) in the battery system, select all cells in a corresponding battery module assembly as balancing targets in the instance that the SOC difference of the corresponding battery module assembly compared to the minimum SOC is greater than or equal to the SOC difference threshold, and transmit a BMA balancing command including information about the selected balancing target and the determined balancing time to the target BMA.

Meanwhile, the second battery management apparatus may receive the BMA balancing command from the first battery management apparatus and perform cell balancing for the balancing time on all cells in the balancing target battery module assembly using the balancing circuit.

In addition, the second battery management apparatus may also perform a general cell balancing operation as seen in FIG. **2****.** In other words, the second battery management apparatus may determine whether the SOC deviation of each cell compared to the minimum cell SOC falls within a range between a first value and a second value; and perform cell balancing on each cell where the SOC deviation of the cell falls within a range between the first value and the second value. Here, the first value may be, for example, 2.5%, and the second value may be, for example, 10%.

Here, the minimum cell SOC among the cell SOCs of a plurality of cells in the battery system may be calculated by the RBMS, which may be the first battery management apparatus. In other words, the RBMS may obtain battery state information from a plurality of second battery management apparatuses, calculate the minimum cell SOC, and provide the calculated information to the plurality of second battery management apparatuses.

Meanwhile, the SOC difference threshold for performing BMA balancing according to embodiments of the present invention may be determined equal to the lower limit value of the cell SOC deviation according to the general cell balancing condition.

Furthermore, a battery management apparatus 200 that controls a battery rack including a plurality of battery module assemblies (BMA) may include at least one processor; and a memory configured to store at least one instruction executed by the at least one processor, and the at least one instruction may include an instruction to determine, at regular intervals, whether one or more condition for performing BMA balancing are satisfied depending on whether the battery rack is in an idle state and on a state of charge of the battery rack; and an instruction to perform BMA balancing by determining a BMA balancing target and a BMA balancing time in the instance that the condition for performing BMA balancing is satisfied.

Here, whether the battery rack is in an idle state may be determined depending on whether a value of current flowing in the battery rack is less than a predetermined current threshold.

The instruction to determine whether the one or more condition for performing BMA balancing is satisfied may include an instruction to determine whether the battery rack remains in an idle state for a certain period of time without performing charging or discharging; and an instruction to determine whether the state of charge of the battery rack exceeds a determined reference.

The instruction to perform BMA balancing may include an instruction to calculate SOC deviation of each battery module assembly compared to the battery module assembly with the minimum state of charge (SOC) in the battery rack; and an instruction to select all cells in a corresponding battery module assembly as balancing targets in the instance that the SOC deviation of the corresponding battery module assembly compared to the minimum SOC is greater than or equal to the SOC deviation threshold.

The at least one instruction may further include an instruction to transmit a BMA balancing command including information about the selected balancing target and determined balancing time to a balancing target battery module assembly.

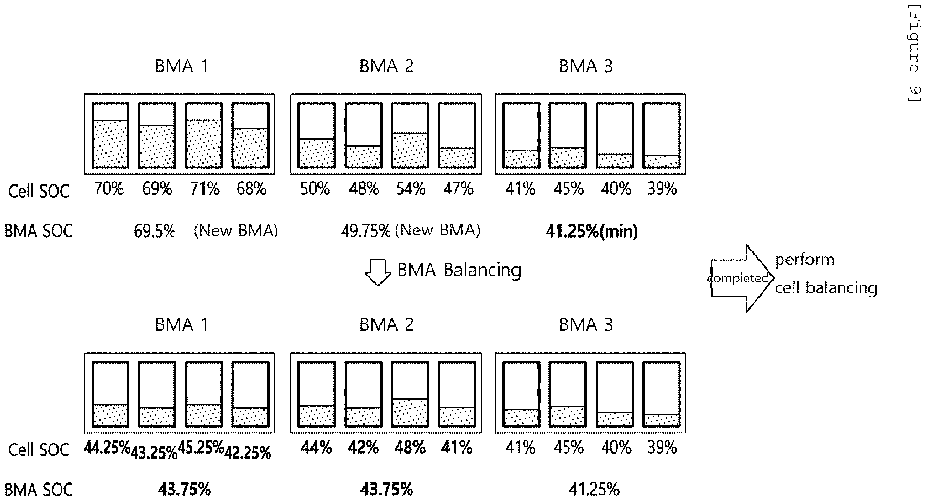

FIG. 9 is a diagram for explaining the BMA balancing concept and balancing performance results according to embodiments of the present invention when replacing a battery module assembly.

As seen above, BMA balancing according to embodiments of the present invention may correct the SOC of the BMA of which the SOC deviation exceeds a SOC deviation threshold (for example, 2.5%) based on the BMA with the lowest SOC. In other words, discharge is performed for all cells in the BMA where a certain range of deviation occurs. The corresponding SOC deviation is a BMA-to-BMA deviation that is not related to defective cells. BMA balancing according to embodiments of the present invention to resolve the corresponding SOC deviation may mainly be performed for the purpose of minimizing the SOC deviation when replacing a battery module assembly, and may be operated before performing a general cell balancing operation.

More specifically, referring to FIG. 9, assume that BMA1 and BMA2 are newly installed when the SOC of BMA3 in use in the existing system is 41.25%. The SOC of newly added BMA1 is 69.5% and the SOC of BMA2 is 49.75%. According to embodiments of the present invention, the SOCs for respective BMAs are compared, and the SOC of the BMA may be set to an average SOC of all cells included in the BMA.

In the system shown in FIG. 9, the lowest BMA SOC is 41.25%, and both the SOC of BMA1 and the SOC of BMA2 have SOC deviations of more than 2.5% compared to the lowest BMA SOC. Therefore, BMA balancing according to the present invention needs to be performed on BMA1 and BMA2, and as a result of the balancing, both the SOCs of BMA1 and BMA2 are adjusted to have a BMA SOC of 43.75%.

After BMA balancing, cell balancing may be performed for each cell, and cell balancing for each cell may be performed in the same operation as a general cell balancing described in FIG. **2****.** Meanwhile, the SOC difference threshold for performing BMA balancing according to embodiments of the present invention may be set equal to the lower limit value of cell SOC deviation of the general cell balancing conditions.

In the embodiments of the present invention, balancing among battery modules may be performed using an existing cell balancing circuit without adding a separate component for balancing among battery modules and without interfering with the general cell balancing function that used to be performed.

Therefore, when replacing or expanding a battery module assembly in a system including multiple battery module assemblies, the SOC deviation among battery module assemblies can be efficiently adjusted.

The operations of the method according to the embodiments of the present invention may be implemented as a computer-readable program or code on a computer-readable recording medium. The computer-readable recording medium may include all types of recording devices in which data readable by a computer system is stored. In addition, the computer-readable recording medium may be distributed in a network-connected computer system to store and execute computer-readable programs or codes in a distributed manner.

In addition, the computer-readable recording medium may include hardware devices specially configured to store and execute program instructions, such as ROM, RAM, flash memory, etc. The program instructions may include not only machine language code created by a compiler, but also high-level language code that can be executed by a computer using an interpreter.

Although some aspects of the invention have been described in the context of the apparatus, it may also represent a description according to a corresponding method, wherein a block or apparatus corresponds to a method step or feature of a method step. Similarly, aspects described in the context of a method may also represent a feature of a corresponding block or item or a corresponding apparatus. Some or all of the method steps may be performed by (or using) a hardware device, such as, for example, a microprocessor, a programmable computer, or an electronic circuit. In some embodiments, one or more of the most important method steps may be performed by such an apparatus.

In the forgoing, the present invention has been described with reference to the exemplary embodiment of the present invention, but those skilled in the art may appreciate that the present invention may be variously corrected and changed within the range without departing from the spirit and the area of the present invention described in the appending claims.

## Claims

1. A battery management apparatus that controls a battery system including a plurality of battery module assemblies (BMA), the apparatus comprising:
at least one processor; and
a memory configured to store instructions executed by the at least one processor,
wherein the instructions cause the at least one processor to:
determine, at predetermined intervals, whether conditions for performing a BMA balancing are satisfied, wherein fulfilment of the conditions depends on at least one of (i) whether the battery system is in an idle state and (ii) a state of charge of the battery system; and
perform the BMA balancing by determining a BMA balancing target and a BMA balancing time in response to at least one of the conditions for performing the BMA balancing being satisfied.

2. The apparatus of claim **1,** wherein the conditions include:
whether the battery system remains in the idle state for a predetermined period of time without performing charging or discharging; and
whether the state of charge of the battery system exceeds a pre-determined reference.

3. The apparatus of claim **1,** wherein the instructions casue the at least one processor to:
calculate a SOC difference of each battery module assembly compared to one battery module assembly with a minimum state of charge (SOC) in the battery system; and
for each battery module assembly, select all cells of the battery module assembly as balancing targets when the SOC difference of the battery module assembly compared to the minimum SOC is greater than or equal to a SOC difference threshold.

4. The apparatus of claim **3,** wherein the instructions cause the at least one processor to:
for each battery module assembly for which all cells of the battery module assembly are selected as balancing targets, transmit a BMA balancing command including information about the balancing targets and a determined balancing time to the battery module assembly.

5. The apparatus of claim **1,** wherein the instructions cause the at least one processor to determine whether the battery system is in an idle state based on whether a value of current flowing in the battery system is less than a predetermined current threshold.

6. A battery module assembly (BMA) balancing method in a battery rack including a plurality of battery module assemblies (BMA), the method comprising:
determining, by a first battery management apparatus configured to control the battery rack, whether one or more conditions for performing a BMA balancing are satisfied, wherein fulfilment of the conditions depends on at least one of (i) whether the battery system including the battery rack is in an idle state and (ii) a state of charge of the battery system at predetermined intervals; and
performing, by the first battery management apparatus, the BMA balancing by determining a BMA balancing target and a BMA balancing time in response to at least one of the conditions for performing the BMA balancing being satisfied.

7. The method of claim 6, wherein determining whether the conditions for performing the BMA balancing include:
whether the battery system remains in the idle state for a pre-determined period of time without performing charging or discharging; and
whether the state of charge of the battery system exceeds a pre-determined reference.

8. The method of claim 6, wherein the performing the BMA balancing includes:
calculating a SOC difference of each battery module assembly compared to one battery module assembly with a minimum state of charge (SOC) in the battery system; and
for each battery module assembly, selecting all cells in the battery module assembly as balancing targets when the SOC difference of the battery module assembly compared to a minimum SOC is greater than or equal to a SOC difference threshold.

9. The method of claim 8, further comprising:
for each battery module assembly for which all cells of the battery module assembly are selected as balancing targets, transmitting a BMA balancing command including information about the balancing target and determined balancing time to the battery module assembly.

10. The method of claim 9, further comprising:
for each battery module assembly for which all cells of the battery module assembly are selected as balancing targets:
receiving, at a second battery management apparatus included in the battery module assembly, the BMA balancing command; and
performing, by the second battery management apparatus, the BMA balancing on all cells in the battery module assembly using an internal balancing circuit.

11. The method of claim 9, further comprising:
for each battery module assembly for which all cells of the battery module assembly are selected as balancing targets:
determining, by the second battery management apparatus, whether a SOC deviation of each cell falls within a range between a first value and a second value; and
for each cell for which the SOC deviation falls within the range between the first value and the second value, performing, by the second battery management apparatus, the BMA balancing.

12. The method of claim 11, wherein the SOC difference threshold for the BMA balancing is equal to the first value.

13. The method of claim 6, wherein determining whether the battery system is in the idle state is based on whether a value of current flowing in the battery system is less than a predetermined current threshold.

14. A battery system including a battery rack having a plurality of battery module assemblies (BMA), the system comprising:
a first battery management apparatus for controlling the battery rack, wherein the first battery management apparatus is configured to determine, at pre-determined intervals, whether conditions for performing a BMA balancing are satisfied, wherein fulfillment of the conditions depends on at least one of (i)whether the battery system is in an idle state and (ii) a state of charge of the battery system, and to determine a BMA balancing target and a BMA balancing time in response to at least one of the conditions for performing the BMA balancing being satisfied; and
a second battery management apparatus located in a battery module assembly and including a balancing circuit, wherein the second battery management apparatus is configured to receive a BMA balancing command including the BMA balancing target and the BMA balancing time from the first battery management apparatus and to perform the BMA balancing.

15. The system of claim 14, wherein the conditions for performing BMA balancing include whether the battery rack remains in an idle state for a pre-determined period of time without performing charging or discharging and whether the state of charge of the battery rack exceeds a pre-determined reference.

16. The system of claim 14, wherein the first battery management apparatus is configured to calculate a SOC difference of each battery module assembly compared to one battery module assembly with a minimum state of charge (SOC) in the battery system and, for each battery module assembly, select all cells of the battery module assembly as balancing targets when the SOC difference of the battery module assembly compared to the minimum SOC is greater than or equal to a SOC difference threshold.

17. The system of claim 16, wherein the first battery management apparatus is configured to transmit the BMA balancing command including the selected balancing target and determined balancing time to each battery module assembly for which all cells of the battery module assembly are selected as balancing targets.

18. The system of claim 17, wherein the second battery management apparatus of each battery module assembly for which all cells of the battery module assembly are selected as balancing targets is configured to receive the BMA balancing command from the first battery management apparatus and to perform the BMA balancing for the balancing time on all cells in the battery module assembly using a balancing circuit.

19. The system of claim 18, wherein the second battery management apparatus is configured to, for each battery module assembly for which all cells of the battery module assembly are selected as balancing targets:
determine whether a SOC deviation of each cell compared to a minimum cell SOC falls within a range between a first value and a second value; and
foreach cell for which the SOC deviation falls within the range between the first value and the second value, perform the BMA balancing.

20. The system of claim 19, wherein the SOC difference threshold for the BMA balancing is equal to the first value.
